Europäisches Patentamt

European Patent Office

Office européen des brevets

(11) Veröffentlichungsnummer : **0 133 892**
B1

(12) EUROPÄISCHE PATENTSCHRIFT

(45) Veröffentlichungstag der Patentschrift :
25.05.88

(51) Int. Cl.⁴ : **H 04 L 27/14,** H 04 N  1/00,
H 03 D  3/24

(21) Anmeldenummer : 84107186.3

(22) Anmeldetag : 22.06.84

(54) Decoder für ein frequenzgetastetes Signal, insbesondere ein FSK-Bildschirmtext-Signal.

(30) Priorität : 06.07.83 DE 3324311

(43) Veröffentlichungstag der Anmeldung :
13.03.85 Patentblatt 85/11

(45) Bekanntmachung des Hinweises auf die Patenterteilung : 25.05.88 Patentblatt 88/21

(84) Benannte Vertragsstaaten :
AT BE CH DE FR GB IT LI LU NL SE

(56) Entgegenhaltungen :
DE-A- 3 014 668
DE-A- 3 022 287
DE-C- 1 131 260
US-A- 4 103 244

(73) Patentinhaber : TELEFUNKEN Fernseh und Rundfunk
GmbH
Göttinger Chaussee 76
D-3000 Hannover 91 (DE)

(72) Erfinder : Sander, Hans-Dieter, Dipl.-Ing.
Hohewurthstrasse 15
D-2854 Loxstedt (DE)
Erfinder : Streckenbach, Wulf-Christian, Dipl.-Ing.
Deveser Strasse 1A
D-3005 Hemmingen 1 (DE)

(74) Vertreter : Einsel, Robert, Dipl.-Ing.
TELEFUNKEN Fernseh und Rundfunk GmbH Göttinger Chaussee 76
D-3000 Hannover 91 (DE)

## Beschreibung

Beim Bildschirmtext (BTX) ist es bekannt, über das Fernsprechnetz ein sogenanntes FSK (frequency shift keying)-Signal zu übertragen. Dieses Signal ist eine sinusförmige Schwingung, deren Frequenz entsprechend einem zu übertragenen digitalen Signal zwischen zwei Werten umgeschaltet ist. Die eine Frequenz beträgt dabei 1 300 Hz und entspricht in dem digitalen Signal dem logischen Wert HIGH oder 1. Die zweite Frequenz beträgt 2 100 Hz und entspricht in dem digitalen Signal dem logischen Wert LOW oder 0.

Ein derartiges FSK-Signal ist ein analoges Signal, aus dem in einem Decoder ein digitales Signal erzeugt wird. Das digitale Signal dient dann z. B. in einem Schriftzeichengenerator zur Erzeugung von Schriftzeichen-Signalen, die auf dem Bildschirm eines Fernsehempfängers nach Speicherung der über einen längeren Zeitraum übertragenen FSK-Signale eine Schriftseite darstellen.

Zur Decodierung des FSK-Signales ist es bekannt, das Signal einer PLL-Phasenregelschleife zuzuführen, deren spannungsgesteuerter Oszillator (VCO) jeweils auf die Frequenz des FSK-Signales geregelt wird. Für diese Regelung muß sich bei einer Frequenzänderung des FSK-Signals die in der Phasenvergleichsstufe der PLL-Schaltung gewonnene und über einen Tiefpaß geführte Regelspannung ändern. Diese sich ändernde Spannung enthält somit die in dem FSK-Signal enthaltene Information. Sie wird als Signalspannung über einen weiteren Tiefpaß einer Schaltung mit Schwellwertcharakteristik, z. B. einer Kippstufe, zugeführt, die an ihrem Ausgang ein digitales Signal entsprechend der Frequenzumtastung des FSK-Signales erzeugt. Ein derartiger FSK-Decoder mit einer PLL-Schaltung ist näher beschrieben in der Firmendruckschrift « FSK-Demodulator/Tone Decoder » Nr. XR-2211 der Firma EXAR INTEGRATED SYSTEMS, INC. Oct. 1976, S. 1-6.

Die Werte der genannten Signalspannung am Eingang der Kippstufe sind von veschiedenen Faktoren abhängig, z. B. von den Frequenzen des FSK-Signales, von der Eigenfrequenz des Oszillators der PLL-Schaltung sowie von Toleranzen der einzelnen Bauteile. Diese Parameter unterliegen in der Praxis Schwankungen, so daß das digitale Signal am Ausgang der genannten Kippstufe verfälscht werden kann. Ein Signalabschnitt des Signales, der z. B. einem Signalabschnitt bestimmter Frequenz in dem FSK-Signal entspricht, kann dann z. B. verkürzt werden. Dadurch entstehen sogenannte Isochronverzerrungen bei der Decodierung des digitalen Signals.

Zur Vermeidung derartiger Isochronverzerrungen ist es erforderlich, den PLL-Decoder genau abzugleichen. Dieser Abgleich ist bei der Fertigung des Decoders notwendig. Bei später auftretenden Änderungen der genannten Parameter kann auch während der Betriebszeit ein Nachabgleich erforderlich sein.

Aus der DE-A-30 22 287 ist ein FSK-Decoder mit einer PLL-Schaltung zur Kompensation von Frequenzschwankungen in FM-Systemen bekannt. Die Frequenzschwankungen werden mit Hilfe einer Regelspannung, die aus der Differenz zwischen Signalspannung und einer Referenzspannung gewonnen wird, durch Einwirken auf den VCO der PLL ausgeregelt.

Ferner ist aus der DE-C-11 31 260 bekannt, aus einer Signalspannung für frequenzgetastete Telegrafie eine mittlere Gleichspannungskomponente mit Hilfe eines Diskriminators abzuleiten, die für eine Nachsteuerung z. B. eines Oszillators genutzt werden kann.

Der Erfindung liegt die Aufgabe zugrunde, einen Decoder für frequenzgetastete Signale so weiterzubilden, daß weder bei der Herstellung noch im Betrieb ein Abgleich erforderlich ist und dennoch keine Isochronverzerrungen auftreten.

Diese Aufgabe wird durch die im Anspruch 1 beschriebene Erfindung gelöst. Vorteilhafte Weiterbildungen der Erfindung sind in den Unteransprüchen beschrieben.

Bei der erfindungsgemäßen Lösung wird also selbsttätig stets ein Abgleich durchgeführt, so daß ein einmaliger Abgleich bei der Fertigung oder ein wiederholter manueller Abgleich während des Betriebes nicht mehr erforderlich ist. Der erfindungsgemäße Abgleich wirkt quasi statisch und stellt auch über einen langen Zeitraum immer die optimalen Verhältnisse her. Da der Abgleich im wesentlichen nur für einmal vorhandene oder langsam auftretende Abweichungen notwendig ist, kann die Schaltung mit einer sehr hohen Zeitkonstante versehen sein. Das hat den Vorteil, daß die zusätzliche Abgleichschaltung gegenüber Störungen weitestgehend gesichert ist.

Ein Ausführungsbeispiel der Erfindung wird anhand der Zeichnung erläutert.

Darin zeigen

Fig. 1 ein Blockschaltbild eines bekannten Decoders mit der erfindungsgemäßen Schaltung,

Fig. 2 ein praktisches Ausführungsbeispiel der AFC-Schaltung in Fig. 1 mit Spannungsbegrenzerdiode,

Fig. 3, 4 Kurven zur Erläuterung der Wirkungsweise des erfindungsgemäßen Abgleichs und

Fig. 5 ein praktisches Ausführungsbeispiel der AFC-Schaltung in Fig. 1 mit anschaltbaren Ersatzspannungsquellen.

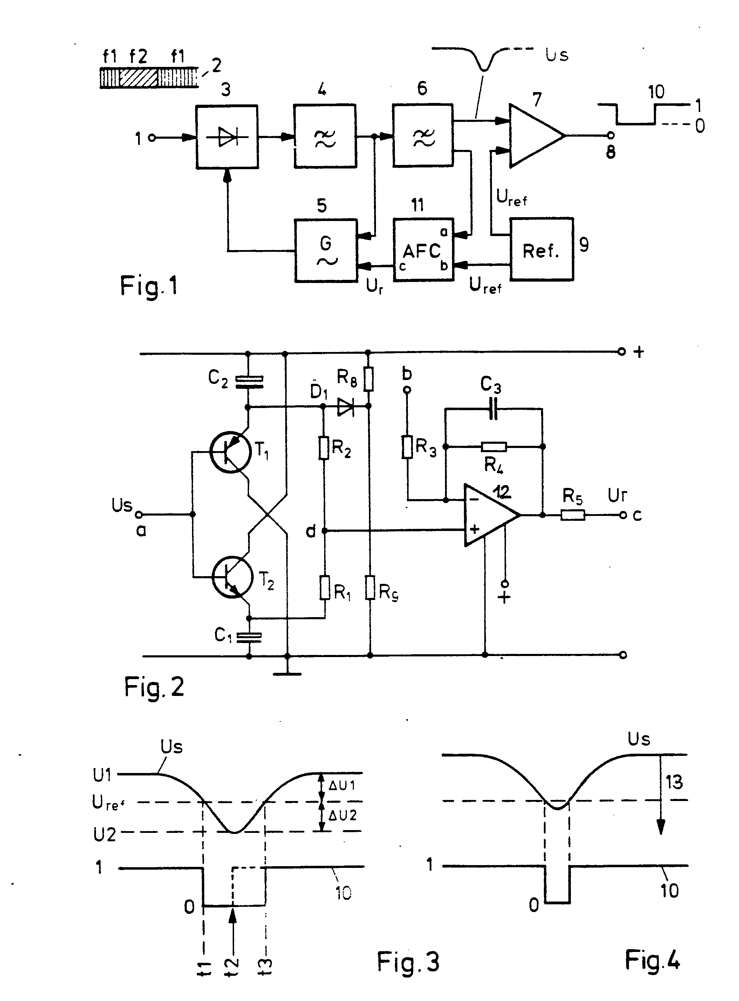

In Fig. 1 steht an der Klemme 1 das FSK-Signal 2, dessen Frequenz zwischen dem Wert f1 = 1 300 Hz (logisch 1) und dem Wert f2 = 2 100 Hz (logisch 0) umgetastet ist. Das Signal 2 gelangt auf die PLL-Schaltung mit der Phasenvergleichsstufe 3, dem Tiefpaß 4 und dem spannungsgesteuerten Oszillator 5 in Form eines VCO. Die Phasenvergleichsstufe 4 liefert über den weiteren Tiefpaß 6 die Signalspannung Us, deren Wert sich entsprechend der Frequenzumtastung des Signals 2 zwischen zwei Werten ändert. Die Signalspannung Us gelangt auf die Vergleichsstufe 7, der außerdem von der Spannungsquelle 9 eine konstante Referenzspannung Uref zugeführt wird. Die Vergleichsstufe 7 ist so bemessen, daß an der Ausgangsklemme 8 ein digitales Signal 10 mit den beiden Spannungswerten 0 und 1 entsteht, entsprechend den Spannungswerten der Signalspannung Us. Die soweit beschriebene Schaltung ist bekannt.

Zusätzlich ist die AFC-Schaltung 11 vorgesehen, die mit der Signalspannung Us and der Referenzspannung Uref gespeist wird. Die Schaltung 11 ermittelt die Amplitudenlage der Signalspannung Us an der Klemme a relativ zur Referenzspannung Uref an der Klemme b. Bei einer Änderung der beiden Werte der Spannung Us, die zu einer Änderung des digitalen Signales 10 führt und Isochronverzerrungen bewirkt, entsteht an der Klemme c am Ausgang der Schaltung 11 eine Regelspannung Ur. Diese Regelspannung ändert die Eigenfrequenz des Oszillators 5, d. h. die Lage seiner Kennlinie relativ zur Frequenzachse, derart, daß die Signalspannung Us wieder die richtige Amplitudenlage zur Referenzspannung Uref einnimmt.

Fig. 2 zeigt die praktische Ausführung der Schaltung 11, wobei die Klemmen a,b,c in Fig. 1 und Fig. 2 einander entsprechen. Der positive Wert der Signalspannung Us an der Klemme a wird über den Transistor T2 in dem Kondensator C1 gespeichert und der negative Wert der Signalspannung Us über den komplementären Transistor T1 am Kondensator C2. Die Kondensatoren C1,C2 sind über die Widerständen R1,R2 miteinander verbunden. Der Verbindungspunkt d ist an den « + »-Eingang des Verstärkers 12 angeschlossen, an dessen « — »-Eingang die Referenzspannung Uref von der Klemme b über den Widerstand R3 angelegt ist. An der Ausgangsklemme c steht die Regelspannung Ur gemäß Fig. 1. Das RC-Glied R4/C3 vom Ausgang zum « — »-Eingang des Verstärkers 12 bildet eine Zeitkonstante von 470 ms entsprechend einer Grenzfrequenz von 0,338 Hz.

Fig. 3 zeigt die richtige Amplitudenlage der Signalspannung Us relativ zur Referenzspannung Uref an den Eingängen der Vergleichsstufe 7. Die Signalspannung Us ändert sich zwischen den Werten U1 und U2, deren Abstände $\Delta$ U1 und $\Delta$ U2 von der Referenzspannung Uref in erwünschter Weise gleich sind. Jeweils beim Durchgang der Signalspannung Us durch die Referenzspannung Uref ändert sich der Wert der digitalen Spannung 10 an der Klemme 8. Es sei angenommen, daß der Anteil der Spannung 10 von t1-t3 in einer an die Klemme 8 angeschlossenen Auswertschaltung, z. B. einem USART (gerät zur seriellen Datenübertragung), in der Mitte zwischen t1 und t3 bei t2 abgefragt wird. Im dargestellten Fall wird bei dieser Abfrage der logische Zustand 0 festgestellt.

In Fig. 4 ist die Signalspannung Us durch Abweichung der beschriebenen Parameter relativ zur Referenzspannung Uref in positiver Richtung verschoben, so daß der Signalanteil der digitalen Spannung 10 mit logischen Wert 0 verkürzt ist. Wenn diese Verkürzung die Größenordnung von 50 % erreicht, wie in Fig. 3 gestrichelt dargestellt ist, so wird die Auswertung des Signals 10 im Zeitpunkt t2 unsicher und kann zu Fehlbewertungen des digitalen Signals 10 in der angeschlossenen Schaltung führen.

Bei der erfindungsgemäßen Regelschaltung wird nun bei der in Fig. 4 dargestellten Abweichung durch die Regelspannung Ur die Eigenfrequenz des Oszillators 5 so geändert, daß die Signalspannung Us in Fig. 4 in Richtung des Pfeiles 13 wieder in die Lage zur Referenzspannung Uref gemäß Fig. 3 verschoben wird, so daß die in Fig. 4 dargestellte Verkürzung des Signals 10 nicht mehr auftritt.

In Fig. 2 ist die Spannung am Kondensator C2 durch die Diode D1 auf den Spannungswert am Verbindungspunkt der Widerstände R8 und R9 + 0,7 V Durchlaßspannung begrenzt. Diese Spannungsbegrenzung hat folgenden Zweck :

Bei der asynchronen, seriellen Datenübertragung wird während der Ubertragungspausen nur die Frequenz f1 = 1 300 Hz, entsprechend dem Stop-Bit bzw. dem logischen Zustand « 1 » übertragen. Dadurch entsteht eine Umladung des Kondensators C2, da der zu f2 = 2 100 Hz gehörende Signalpegel, durch den der Kondensator C2 auf einen Wertunterhalb der Referenzspannung aufgeladen bzw. gehalten wird, über beliebig lange Zeit nicht vorhanden ist. Durch die Umladung des Kondensators C2 wird nun aufgrund der unsymmetrischen Lage der Referenzspannung Uref von $\Delta$ U1 und $\Delta$ U2 ein Regelvorgang eingeleitet, und zwar so lange, bis am Punkt d keine Abweichung von Uref mehr besteht. Ohne die Diode D1 würde dieses dazu führen, daß $\Delta$ U1 und $\Delta$ U2 jeweils dem Spitzenwert des der Spannung U1 überlagerten Störsignals entsprechen. Hierbei würde der arithmetische Mittelwert des Störsignals der Referenzspannung Uref entsprechen und somit zu einer Decodierung eines Signals führen, das nicht existiert. Dies wird durch die Diode D1 verhindert, indem $\Delta$ U2 auf einen maximalen Spannungswert begrenzt wird, der sich mindestens im Wert der Amplitude des Störsignals auf U1 in negativer Richtung von Uref unterscheidet, andererseits nicht innerhalb des Streubereiches von $\Delta$ U2 liegt.

Bei einem praktisch erprobten Ausführungsbeispiel hatten die in Fig. 2 dargestellten Bauteile folgende Werte.

R1 : 220 kOhm
R2 : 220 kOhm
R3 : 100 kOhm
R4 : 1,0 MOhm
R5 : 47 kOhm
R8 : 22 kOhm
R9 : 11 kOhm
D1 : Typ 1N 4148
T1 : Typ BC 558B
T2 : BC 548B
Verstärker 12 : (OP) IC vom Typ TL 071
C1 : 1 $\mu$F
C2 : 1 $\mu$F
C3 : 0,47 $\mu$F

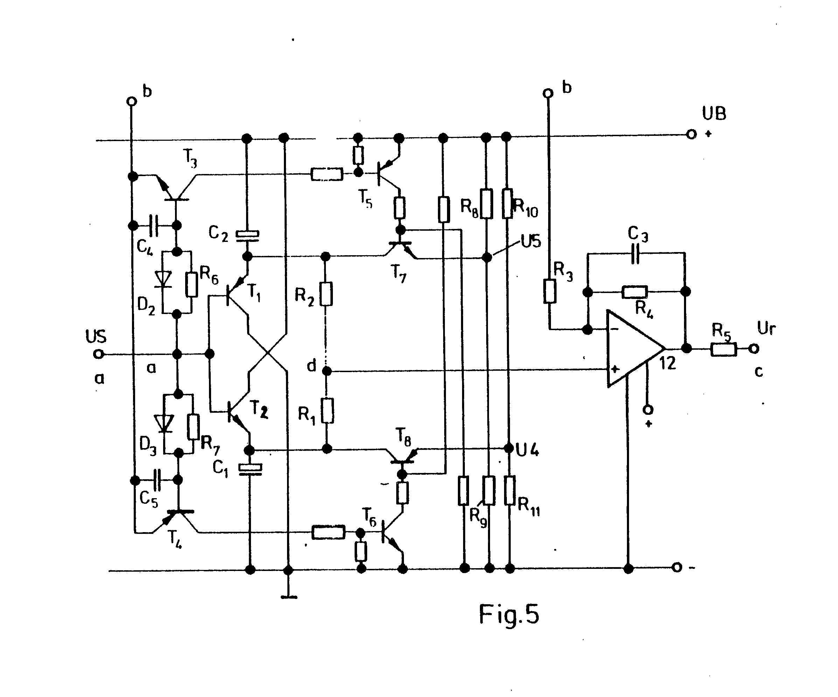

Fig. 5 zeigt eine Abwandlung der Fig. 2, die auch dann vorteilhaft wirkt, wenn über beliebig lange Zeit einer der beiden Spannungswerte U1, U2 der Signal-Spannung US nicht empfangen werden. Für einen derartigen Fall, z. B. bei Fehlen von U2 entsprechend 2 100 Hz wird über den Transistor T7, welcher über T3 und T5 gesteuert wird, der Kondensator C2 an die Spannungsquelle U5 angeschaltet, oder bei Fehlen von U1 entsprechend 1 300 Hz der Kondensator C1 über den Transistor T8, gesteuert von T4 und T6 an die Spannungsquelle U4 angeschaltet. Diese Anschaltung ist abhängig von der jeweils anstehenden Spannung US. Wechselt diese Spannung zwischen U1 und U2 in schneller Folge, so werden die Kondensatoren C4 und C5 mit der einen Halbwelle aufgeladen und über die Diode D2 bzw. D3 sofort mit Anstehen der anderen Halbwelle wieder entladen. Dadurch bleiben die Transistoren T2 und T4 gesperrt und die Schaltung funktioniert wie in Fig. 2 beschrieben. Bleibt der Wechsel der Steuerspannung US aus, d. h. fehlt eine der beiden Frequenzen z. B. f = 2 100 Hz in den Übertragungspausen, wird in diesem Fall der Kondensator C4 positiv aufgeladen, wodurch C2 über die E-C Strecke von T7 an die Spannung U5 angelegt wird. Diese Spannung U5 wird durch den Spannungsteiler R8/R9 realisiert, der so ausgelegt ist, daß an C2 z. B. 1/4 UB angelegt wird.

Im anderen Fall, bzw. Fehlen von U1 = 1 300 Hz wird C5 aufgeladen. Dadurch wird C1 an die Spannung U4 gelegt, die durch den Spannungsteiler R10/R11 z. B. auf 3/4 UB festgelegt ist.

Die Zeitkonstante für die Anschaltung der Ersatzspannungsquelle an die Kondensatoren ist derart bemessen, daß bei Fehlen einer der Frequenzen f1, f2 die Spannung an den Kondensatoren C1 bzw. C2 maximal um 10 % abfallen darf, bevor T2 bzw. T8 geschlossen werden. Diese Zeitkonstante wird durch Bemessung der Widerstände R6 bzw. R7 sowie der Kondensatoren C4 bzw. C5 festgelegt.

### Patentansprüche

1. Decoder für ein frequenzgetastetes Signal (2), insbesondere ein FSK-Bildschirmtext-Signal, mit einer PLL-Schaltung, bestehend aus einem regelbaren Oszillator (5) und einer Phasenvergleichsstufe (3), von der eine sich zwischen zwei Werten (U1,U2) ändernde Signalspannung (Us) abgeleitet wird, die in Relation zu einer Referenzspannung (Uref) einerseits für die Erzeugung einer Regelspannung (Ur) in einer Regelspannungserzeugerschaltung (11) für die Nachsteuerung (AFC) des Oszillators (5) und andererseits für die Erzeugung eines Ausgangssignales (10) in einer amplitudenselektiven Schaltung (7) ausgewertet wird, dadurch gekennzeichnet, daß in der Regelspannungserzeugerschaltung (11) die beiden Spannungswerte (U1,U2) der Signalspannung (Us) in zwei über einen Widerstandsnetzwert (R1,R2) miteinander verbundenen Kondensatoren (C1,C2) gespeichert werden und die Spannung an einem Abgriff (d) dieses Netzwertes (R1,R2) zusammen mit der Referenzspannung (Uref) einer die Regelspannung (Ur) liefernden Vergleichsstufe (12) zugeführt wird.

2. Decoder nach Anspruch 1, dadurch gekennzeichnet, daß das Netzwerk aus zwei gleich großen Widerständen (R1,R2) besteht.

3. Decoder nach Anspruch 1 und 2, dadurch gekennzeichnet, daß eine die Signalspannung (Us) führende Klemme (a) mit den Basen von zwei komplementären Transistoren (T1,T2) je in Kollektorbasisschaltung verbunden ist, in deren Emitterkreise die beiden Kondensatoren (C1,C2) liegen.

4. Decoder nach Anspruch 1, dadurch gekennzeichnet, daß an einen Kondensator (C2) eine zur Spannungsbegrenzung dienende Diode (D1) angeschlossen ist.

5. Decoder nach Anspruch 1, 2 und 3, dadurch gekennzeichnet, daß bei Fehlen einer der beiden Spannungswerte (U1,U2) der Signalspannung (US) an die Kondensatoren (C1,C2) Mittel vorgesehen sind, durch die eine Ersatz-Spannungsquelle (U4,U5) angeschaltet wird.

6. Decoder nach Anspruch 5, dadurch gekennzeichnet, daß die Ersatz-Spannungsquelle (U4,U5) einer Spannung entspricht, die den Generator (5) so nachstimmt, als wenn eine Spannung (U1,U2) vorhanden wäre.

7. Decoder nach Anspruch 6, dadurch gekennzeichnet, daß die Ersatz-Spannungsquelle (U4,U5) bei Fehlen einer der beiden Spannungswerte (U1,U2) der Signalspannung (US) mit einer derartigen Verzögerung angeschaltet wird, daß ein Absinken der an den Kondensatoren (C1,C2) anstehenden Spannung um mehr als 10 % vermieden wird.

8. Decoder nach Anspruch 1, dadurch gekennzeichnet, daß im Weg der Regelspannung (Ur) ein aktiver Tiefpaß (R4,C3) mit einer Grenzfrequenz in der Größenordnung von 0,35 Hz liegt.

### Claims

1. A decoder for a frequency-keyed signal (2), particularly an FSK view-data signal, having a PLL circuit consisting of a controllable oscillator (5) and a phase-comparison stage (3) from which a signal voltage (Us) varying between two values (U1, U2) is derived, which voltage is evaluated, in relation to a reference voltage (Uref), on the one hand for the generation of a control voltage (Ur) in a control-voltage generator circuit (11) for the automatic frequency control (AFC) of the oscillator (5) and on the other hand for the generation of an output signal (10) in an amplitude-selection circuit (7), characterised in that the two voltage values (U1, U2) of the signal voltage (Us) are stored in the control-voltage generator circuit (11), in two capacitors (C1, C2) connected to one another via a resistor network (R1, R2) and the voltage at a tap (d) of this network (R1, R2) is fed, together with the reference voltage (Uref), to a comparison stage (12) delivering the control voltage (Ur).

2. A decoder according to Claim 1, characterised in that the network consists of two equally large resistors (R1, R2).

3. A decoder according to Claims 1 and 2, characterised in that a terminal (a) carrying the signal voltage (Us) is connected to the bases of two complementary transistors (T1, T2) each in a collector-to-base circuit and in the emitter circuits of which, the two capacitors (C1, C2) are connected.

4. A decoder according to Claim 1, characterised in that a diode (D1) serving to limit the voltage is connected to one capacitor (C2).

5. A decoder according to Claims 1, 2 and 3, characterised in that, in the absence of one of the two voltage values (U1, U2) of the signal voltage (Us) at the capacitors (C1, C2), means are provided whereby a stand-by voltage source (U4, U5) is connected in.

6. A decoder according to Claim 5, characterised in that the stand-by voltage source (U4, U5) corresponds to a voltage which trims the frequency of the generator (5) as if a voltage (U1, U2) were present.

7. A decoder according to Claim 6, characterised in that, in the absence of one of the two voltage values (U1, U2) of the signal voltage (US), the stand-by voltage source (U4, U5) is connected in with such a delay that a drop of the voltage appearing at the capacitors (C1, C2) by more than 10 % is avoided.

8. A decoder according to Claim 1, characterised in that an active low-pass filter (R4, C3) with a critical frequency of the order of magnitude of 0.35 Hz is connected into the path of the control voltage (Ur).

**Revendications**

1. Décodeur pour un signal (2) modulé par déplacement de fréquence, notamment pour un signal de télétexte FSK, comportant un circuit à boucle de verrouillage de phase PLL, constitué par un oscillateur réglable (5) et un étage comparateur de phase (3), dont est dérivée une tension de signal (Us), qui varie entre deux valeurs (U1,U2) et qui est évaluée, en rapport avec une tension de référence (Uref) d'une part pour la production d'une tension de réglage (Ur) dans un circuit (11) de production de la tension de réglage pour réaliser la commande asservie (AFC) de l'oscillateur (5) et d'autre part pour la production d'un signal de sortie (10) dans un circuit (7) sélectif du point de vue de l'amplitude, caractérisé en ce que dans le circuit (11) de production de la tension de réglage, les deux valeurs (41, 42) de la tension de signal (Us) sont stockées dans deux condensateurs (C1,C2) reliés entre eux par l'intermédiaire d'un réseau de résistances (R1,R2), et la tension présente sur une prise (d) de ce réseau (R1,R2) est envoyée, en commun avec la tension de référence (Uref) à un étage comparateur (12) délivrant la tension de réglage (Ur).

2. Décodeur selon la revendication 1, caractérisé en ce que le réseau est constitué de deux résistances (R1,R2) de même valeur.

3. Décodeur selon les revendications 1 et 2 prises dans leur ensemble, caractérisé en ce qu'une borne (a), qui délivre la tension de signal (Us), est reliée aux bases de deux transistors complémentaires (T1,T2) branchés chacun selon un montage collecteur-base, et dont les circuits d'émetteur contiennent les deux condensateurs (C1,C2).

4. Décodeur selon la revendication 1, caractérisé en ce qu'une diode (D) de limitation de la tension est raccordée au condensateur (C2).

5. Décodeur selon les revendications 1 à 3 prises dans leur ensemble, caractérisé en ce que dans le cas de l'absence de l'une des deux valeurs (U1,U2) de la tension de signal (US) aux bornes des condensateurs (C1,C2), il est prévu des moyens permettant de raccorder une source de tension de remplacement (U4,U5).

6. Décodeur selon la revendication 5, caractérisé en ce que la source de tension de remplacement (U4,U5) correspond à une tension qui règle par asservissement le générateur (5) comme si une valeur de tension (U1,U2) était présente.

7. Décodeur selon la revendication 6, caractérisé en ce que dans le cas de l'absence de l'une des deux valeurs (U1,U2) de la tension de signal (US), la source de tension de remplacement (U4,U5) est raccordée moyennant un temps de retard qui évite une chute de plus de 10 % de la tension présente aux bornes des condensateurs (C1,C2).

8. Décodeur selon la revendication 1, caractérisé en ce qu'un filtre passe-bas actif (R4,C3) possédant une fréquence limite de l'ordre de 0,35 Hz est branché dans le circuit délivrant la tension de réglage (Ur).

Fig. 1

Fig. 2

Fig. 3

Fig. 4

Fig.5

0 133 892